# EUROPEAN PATENT APPLICATION

(11) **EP 0 567 679 A1**
(43) Date of publication of application: **03.11.1993**
(21) Application number: 92107374.8
(22) Date of filing: 30.04.1992
(51) Int. Cl.: E04F 15/024, F16B 17/00

(54) **Load-bearing foot for raised floors**

(71) Applicant: HIROSS INTERNATIONAL CORPORATION B.V., NL-1071 DJ Amsterdam (NL)
(72) Inventor: Chiericati, Giangiorgio, I-36100 Vicenza (IT); Biasiolo, Giuliano, I-35010 Cadoneghe (Prov. Padova) (IT)
(74) Representative: Gibler, Ferdinand, Dipl.Ing. Dr. techn.

(57) **Abstract**

The load-bearing foot for raised floors comprises a section of metallic tube (1) which is inserted, with its lower end, in a corresponding hole (2) of a ground resting plate (3) which is coupled thereto. The plate (3) is blocked between annular ridges (6,7) obtained by deformation of the tube section (1). A threaded rod (9) is at least partially inserted and guided in the upper end of the tube section (1) and is associated with a bush (8) for adjusting its insertion depth. The rod (9) is provided, in an upward position, with a plate (10) for supporting and coupling the elements which constitute the floor which is welded thereto.

## Description

The present invention relates to a load-bearing foot for raised floors.

Raised floors, as is known, are composed of modular panels which are arranged on top of a plurality of feet which support them at their corners.

The feet are normally mutually connected by a plurality of cross-members.

Each foot usually comprises a tube section in which a threaded stem, provided with an adjustment nut and with a ground resting base welded thereto, is inserted and guided in a downward position.

A plate is welded in an upward position to said tube section which constitutes the plane for supporting and rigidly coupling the ends of the reinforcement cross-members.

The height of raised floors from the ground can vary according to the user's requirements, so that the feet must be manufactured in series with different dimensions.

In practice, the various feet differ from one another in the different length of the tube sections.

The threaded rods, tube sections, bases and adjustment nuts are galvanized, but after the welding operations suitable for producing the feet it is in any case necessary to perform galvanization again.

This entails many problems in terms of production, increasing manufacture times and the related costs.

The presence of weldings in the regions of the feet which are most subjected to loads, in particular in the base regions, furthermore does not allow to achieve great mechanical strength, and this is a considerable limitation, in view of the fact that in various countries there are statutory provisions with rather stringent specifications which do not allow marketing if they are not complied with or exceeded.

The aim of the present invention is to provide a new load-bearing foot for raised floors which solves the problems described above in known types.

A consequent primary object is to provide a foot which is composed of a small number of simple elements.

Another important object is to provide a foot which is easy to assemble and adjust.

Not least object is to reduce the manufacturing costs related to the production of feet for raised floors.

This aim, these objects and others which will become apparent hereinafter are achieved by a load-bearing foot for raised floors, characterized in that it comprises a section of metallic tube which is inserted, with its lower end, in a corresponding hole of a ground resting plate which is coupled thereto, said plate being blocked between two annular ridges obtained by deformation of said tube section; a threaded rod being at least partially inserted and guided in the upper end of said tube section and being associated with means suitable for adjusting its insertion depth, said rod being provided, in an upward position, with a plate for supporting and rigidly associating the elements which constitute the floor.

Further characteristics and advantages of the invention will become apparent from the detailed description of two embodiments thereof, illustrated only by way of non-limitative example in the accompanying drawings, wherein:
figure 1 is a perspective view of a first embodiment of the foot according to the invention;
figure 2 is a longitudinal sectional view of the foot of figure 1;
figure 3 is an enlarged sectional view of a detail of the foot of figures 1 and 2;
figure 4 is a partially sectional perspective view of a second embodiment of the foot according to the invention.

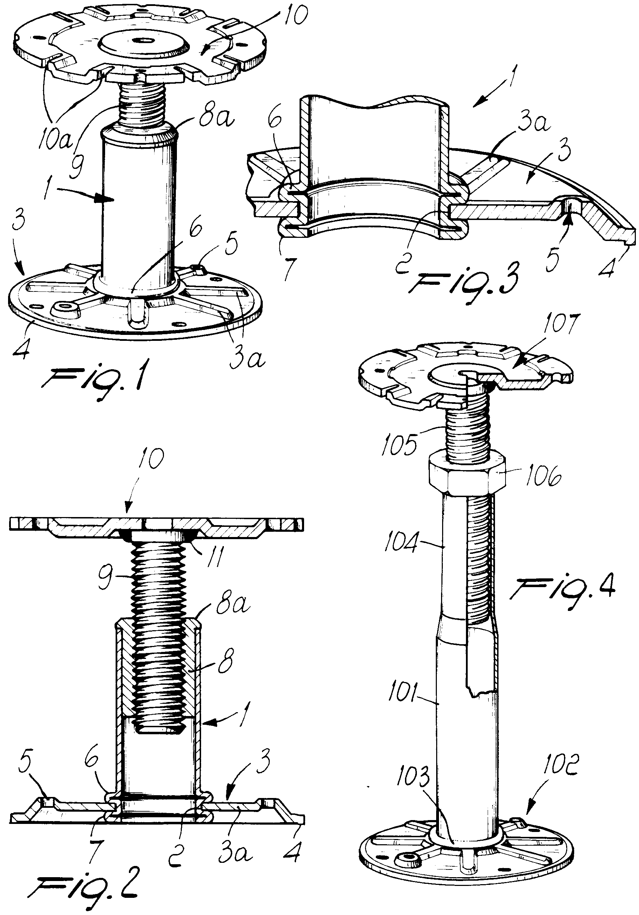

With reference to the above-cited figures 1 to 3, a first embodiment of the foot according to the invention, suitable for floors which are only slightly raised from the ground, comprises a short section of metallic tube 1 inserted, with its lower end, in a corresponding hole 2 of a shaped ground resting plate 3 which conveniently has a disk-like shape with radial stiffening ridges 3a.

The hole 2 is arranged axially on the plate 3, and said plate is shaped so that it has only a peripheral ring 4 for resting on the ground.

This is done to prevent it from being affected by any bumps or depressions of the resting region.

Said plate 3 is also provided with holes 5 for screws which are suitable for electrically grounding the entire foot.

According to the invention, the locking of the plate 3 to the section 1 is provided by the presence of two annular ridges, respectively 6 and 7, which are obtained by plastic deformation of said section 1.

As can be seen in particular in figure 3, the two ridges 6 and 7 have a cross-section which is substantially shaped like a flattened C with joined arms.

In practice, the upper ridge 6 is produced first, then the plate 3 is inserted and finally the lower ridge 7 is produced and locks the plate to the section 1.

In this manner, the execution of the weldings now used to join the section to the plate is avoided.

This means that it is not necessary to perform further galvanization if, as is common, the section and the plate are made of galvanized steel.

A bush 8 is inserted in the upper end of the section 1 with slight interference, and rests thereon in an upward region by means of an annular abutment ridge 8a, and has a threaded axial hole in which a complementarily threaded rod 9 engages; the disk-like contoured plate 10 for the bearing and coupling of the elements which constitute the floor and for the cross-members which stiffen the structure is welded to the upper end of said rod 9.

For this purpose, the plate 10 is provided with pairs of slots 10a in which, according to a known method, the wings of the cross-members, which conveniently have an inverted-U cross-section, are inserted at their ends.

The welding 11 which joins the rod 9 to the plate 10 is a continuous ring and gives the assembly considerable resistance to loads.

The threaded coupling between the rod 9 and the bush 8 allows to adjust the distance between the plate 3 and the plate 10.

With reference now to the above mentioned figure 4, a second embodiment of the foot according to the invention, suitable for higher raised floors, comprises a longer section of metallic tube 101 which is coupled, like the preceding one, to a base plate 102 by means of annular ridges, only the upper one of which, designated by 103, is visible.

In an upward region, said section 101 has an end 104 which is still cylindrical but has a smaller diameter than the lower region and an internal diameter which is suitable for snugly accommodating a threaded rod 105 which is partially inserted therein.

The taper is conveniently produced by means of operations for the plastic deformation of the material, with a consequent increase in thickness.

This leads to an increase in mechanical strength in this region.

A hexagonal adjustment nut 106 is screwed on said threaded rod 105 and abuts on the end 104 of the section 101.

Like the preceding rod 9, said rod 105 has a disk-like contoured plate 107, for the support and coupling of the elements which constitute the floor, which is welded thereto in an upward position.

And with a known method, the lower face of the nut 106 can be provided with radial ridges which are accommodatable within complementarily shaped seats provided on the edge of the end 104, so as to lock rotation once the height of the plate 107 has been adjusted.

Experimental results have shown that the foot according to the invention, in both of its embodiments, has considerably greater mechanical strength than known types and is capable of passing without problems the tests prescribed by the most stringent statutory provisions.

As regards manufacture, it is facilitated as regards the lower part, since it is sufficient to simply prepare the tube sections with an adequate length, prepare the plates and then join them in a single machine which forms the ridges between which the plates are locked.

In view of the need to use oil during plastic deformation, a subsequent cleaning bath is therefore also provided for.

In any case, the need to perform subsequent galvanizations is eliminated.

In practice it has thus been observed that the foot according to the invention has achieved the intended aim and objects of the present invention.

The invention thus conceived is susceptible to numerous modifications and variations, all of which are within the scope of the inventive concept.

All the details may furthermore be replaced with other technically equivalent elements.

In practice, the materials employed, so long as they are compatible with the contingent use, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Load-bearing foot for raised floors, characterized in that it comprises a metallic tube section (1,101) which is inserted, with its lower end, in a corresponding hole (2) of a ground resting plate (3,102) which is coupled thereto, said plate (3,102) being blocked between annular ridges (6,7,103) obtained by deformation of said tube section (1,101); a threaded rod (9,105) being at least partially inserted and guided in the upper end of said tube section (1,101) and being associated with means (8,106) for adjusting its insertion depth, said rod (9,105) being provided, in an upward position, with a plate (10,107) for supporting and rigidly associating the elements which constitute the floor.

2. Load-bearing foot according to claim 1, characterized in that said annular ridges (6,7,103) are obtained by plastic deformation of said tube section (1,101).

3. Load-bearing foot according to claims 1 and 2, characterized in that said annular ridges (6,7,103) have a cross-section shaped like a flattened C with joined arms.

4. Load-bearing foot according to claim 1, characterized in that said means for adjusting the insertion depth of said threaded rod (9) are constituted by an internally threaded bush (8) which is inserted with interference in the upper end of said tube section (1) and rests thereon in an upward region by means of an annular abutment ridge (8a).

5. Load-bearing foot according to claims 1, 2 and 3, characterized in that said metallic tube section (101) has an upper end (104) which has a cylindrical shape of a smaller diameter than the lower region thereof, such as to snugly accommodate said threaded rod (105).

6. Load-bearing foot according to claim 1, characterized in that said means for adjusting the insertion depth of said rod (105) are constituted by a hexagonal nut (106) which is screwed thereon and abuts against the edge of the upper end (104) of said tube section (101).

7. Load-bearing foot according to one or more of the preceding claims, characterized in that said plate (10,107) for supporting and coupling the elements which constitute the floor is welded to said threaded rod (9,105), the welding (11) being constituted by a continuous annular bead.

8. Load-bearing foot according to one or more of the preceding claims, characterized in that said ground resting plate (3,102) has holes (5) for electrical connection screws for grounding.
